# EUROPEAN PATENT SPECIFICATION

(11) **EP 3 701 175 B1**
(45) Date of publication and mention of the grant of the patent: **14.10.2026**
(21) Application number: 18773642.6
(22) Date of filing: 30.08.2018
(51) Int. Cl.: F16K 15/20, F16K 15/06

(54) **INFLATION VALVE**
AUFBLASVENTIL
VALVE DE GONFLAGE

(30) Priority: 27.10.2017 IN 201741038287
(43) Date of publication of application: 02.09.2020
(73) Proprietor: SIGNODE INDIA LIMITED, Banjara Hills, Hyderabad 500034 (IN)
(72) Inventor: KONANTAMBIGI, Sunil Madhukar, Hyderabad 500034 (IN)
(74) Representative: Lang, Johannes
(86) International application number: PCT/IN2018/050561
(87) International publication number: WO 2019/082198

(56) References cited:
- WO-A1-2008/110981
- WO-A2-2015/020872
- DE-U1- 202007 000 758
- DE-U1- 202007 000 758
- US-A- 4 073 389
- US-A1- 2012 048 392
- US-A1- 2012 285 552
- US-A1- 2014 209 185
- US-A1- 2016 186 875

## Description

### BACKGROUND

Various pneumatic valves are known and used in or for a variety of products. For example, US 2012/285552 A1 discloses an air valve device that is adapted to be fitted into an opening of an inflatable article, and that includes a valve seat having a seat body that is disposed between an inflating port and a conduit, and a valve disc unit disposed in the conduit to be moved between opened and closed positions, and having a valve disc connected with a plunger, an elastomeric seal ring superimposed on a padded region of the valve disc. A rigid retaining cap is disposed to bring a base layer of the seal ring in an abutting engagement with the padded region of the valve disc so as to secure the seal ring to the valve disc while permitting a sealing marginal layer of the seal ring to be air-tightly engaged with the seat body in the closed position. As another example, US 2016/0186875 A1 discloses an inflation valve for inflating containers with non-rigid walls. The inflation valve comprises a tubular body defining a passage with a first opening at one end and a second opening at its opposite end, adapted to be secured to a container. The inflation valve comprises a sealing disc adapted to sealingly close off the second opening to the passage in the tubular body, and adapted to open the second opening mechanically when an inflation device is inserted into the passage through the first opening and thus gas may be passed into the container through the second opening, thereby moving the sealing disc away from the second opening. The inflation valve furthermore comprises a guide member located within the passage of the tubular body, a spring adapted to assist the sealing disc to close off the second opening, and a gasket and/or sealing ring adapted to assist the sealing disc to close off the second opening. Valves are often employed in inflatable objects such as inflatable dunnage bags.

Inflatable dunnage bags are commonly used to stabilize cargo during transportation of cargo containers (such as railroad cars and semi-trailers), thereby improving safety and reducing the likelihood of damage to the cargo. Dunnage bags are commonly inflated and deflated before and after use through valves configured for this purpose. Dunnage bags are typically positioned in voids or spaces between the cargo and/or between the cargo and the walls of the cargo container and inflated to a desired internal pressure, such as a designated operating pressure.

More specifically, the user typically positions the dunnage bag in the appropriate void or space and then inflates the dunnage bag to the desired internal pressure using pressurized gas such as air from a pressurized gas supply. Typically, to inflate a dunnage bag, the user connects the pressurized gas supply to the valve, which is attached to the inflatable/deflatable body of the dunnage bag and which provides an opening in the dunnage bag. If the dunnage bag needs to be repositioned during inflation, the user opens the valve associated with the dunnage bag to enable the gas from within the dunnage bag to escape, partially deflating the dunnage bag. The user then closes or enables the valve to close and the dunnage bag can be repositioned and inflated to the desired internal pressure, such as the designated operating pressure. When the dunnage bag needs to be removed from its position between the cargo or between the cargo and the walls of the cargo container to enable the cargo to be unloaded from the cargo container, the user opens the valve to enable the gas in the dunnage bag to escape and thus deflate the dunnage bag.

There is a continuing need to make such valves simpler, easier to manufacture and assemble, made from or with less components, less expensive, more durable (e.g., reusable for longer durations), and that provide relatively greater gas flow rates into and out of the inflatable object.

Accordingly, there is a need for a new and improved valve that solves these requirements, and for new and improved inflatable objects such as dunnage bags having such new and improved valves.

### SUMMARY

Various embodiments of the present disclosure provide a reusable valve that is simpler, easier to manufacture and assemble, made from or with less components, less expensive, more durable (e.g., reusable for longer durations), and that provides relatively high gas flow rates through the valve into and out of an inflatable object (such as a dunnage bag) to which it is attached.

More specifically, various embodiments of the present disclosure provide a valve for that can be used in connection with any suitable inflatable object such as, but not limited to: a dunnage bag, a bag other than a dunnage bag, an air mattress, an inflatable boat or floatable object such as a raft, and a tire.

The valve according to the invention is configured to be attached to an inflatable object and generally includes a housing defining a gas passageway and a sealing assembly connected to and moveable relative to the housing to: (a) a resting closed position that prevents gas from passing through the housing, and (b) an open position that enables gas to pass through the housing. The sealing assembly includes: (i) a stem, (ii) a sealing ring positionable in and connected to the stem, (iii) a sealing plate attached to the stem, (iv) a spring, and (v) a locking pin positioned in and locked into the stem. Notably, the locking pin includes a plurality of locking ribs or lips, and the stem includes a shaft that defines a plurality of notches configured to receive the locking lips or ribs of the locking pin.

In various embodiments, the housing includes a cylindrical wall having opposing outer and inner surfaces, wherein the inner surface partially defines a gas passageway. The housing further includes, among other elements described below, a stem supporter integrally connected to and extending inwardly transversely from the inner surface of the cylindrical wall. The stem supporter is configured to support the sealing assembly, enable the sealing assembly to move relative to the housing, enable the sealing assembly to be positioned in the open and closed positions, and define relatively large gas passageways through the housing.

Additional features and advantages of the present disclosure are described in, and will be apparent from, the following Detailed Description and the Figures.

### BRIEF DESCRIPTION OF THE DRAWINGS

Figure 1 is a top perspective view of one example embodiment of a valve of the present disclosure.
Figure 2 is a bottom perspective view of the valve of Figure 1, showing the valve in a closed position.
Figure 3A is a cross-sectional view of the valve of Figure 1, taken substantially along line 3-3 of Figure 1, and showing the valve in a closed position.
Figure 3B is a cross-sectional view of the valve of Figure 1, similar to Figure 3A, and showing the valve in an open position.
Figure 4 is an exploded perspective view of the valve of Figure 1.
Figure 5 is a top perspective view of the housing of the valve of Figure 1.
Figure 6 is a top view of the housing of the valve of Figure 1.
Figure 7 is a side view of the housing of the valve of Figure 1.
Figure 8 is a cross-sectional view of the housing of the valve of Figure 1, taken substantially along line 8-8 of Figure 6.
Figure 9 is a top perspective view of the stem of the sealing assembly of the valve of Figure 1.
Figure 10 is a top view of the stem of the sealing assembly of the valve of Figure 1.
Figure 11 is a bottom view of the stem of the sealing assembly of the valve of Figure 1.
Figure 12 is a side view of the stem of the sealing assembly of the valve of Figure 1.
Figure 13 is a side partial cross sectional view of the stem of the sealing assembly of the valve of Figure 1, taken substantially along line 13-13 of Figure 10.
Figure 14 is a top perspective view of the sealing ring of the sealing assembly of the valve of Figure 1.
Figure 15 is a side view of the sealing ring of the sealing assembly of the valve of Figure 1.
Figure 16 is a cross-sectional view of the sealing ring of the sealing assembly of the valve of Figure 1, taken substantially along line 16-16 of Figure 15.
Figure 17 is a top perspective view of the sealing plate of the sealing assembly of the valve of Figure 1.
Figure 18 is a side view of the sealing plate of the sealing assembly of the valve of Figure 1.
Figure 19 is a cross-sectional view of the sealing plate of the sealing assembly of the valve of Figure 1, taken substantially along line 19-19 of Figure 18.
Figure 20A is a perspective view of the locking pin of the sealing assembly of the valve of Figure 1 (shown from a first side).
Figure 20B is a perspective view of the locking pin of the sealing assembly of the valve of Figure 1 (shown from a second opposite side).
Figure 21 is a bottom view of the locking pin of the sealing assembly of the valve of Figure 1.
Figure 22A is a side view of the locking pin of the sealing assembly of the valve of Figure 1 (shown from a first side).
Figure 22B is a side view of the locking pin of the sealing assembly of the valve of Figure 1 (shown from an opposite side).
Figure 23 is a cross-sectional view of the locking pin of the sealing assembly of the valve of Figure 1, taken substantially along line 23-23 of Figure 21.

### DETAILED DESCRIPTION

Various embodiments of the present disclosure provide a valve, and particularly a valve for an inflatable object. It should be appreciated that the valve of the present disclosure can be used in connection with any suitable inflatable object such as, but not limited to: a dunnage bag, a bag other than a dunnage bag, and air mattress, a raft or other inflatable boat or floatable object, and a tire.

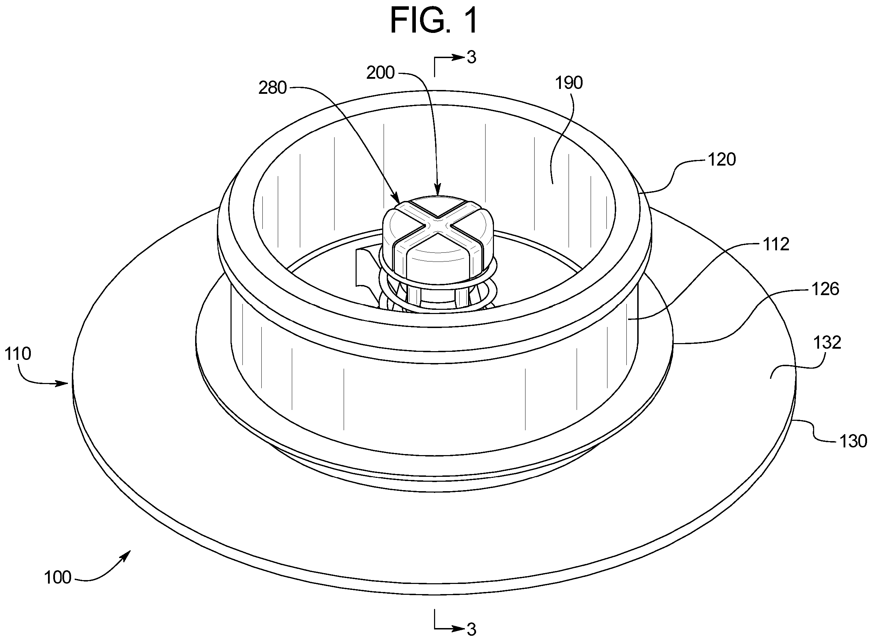

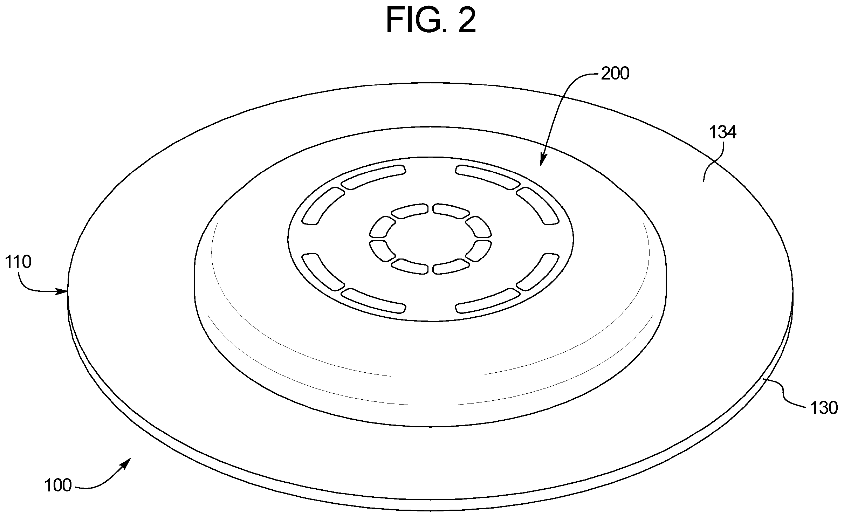

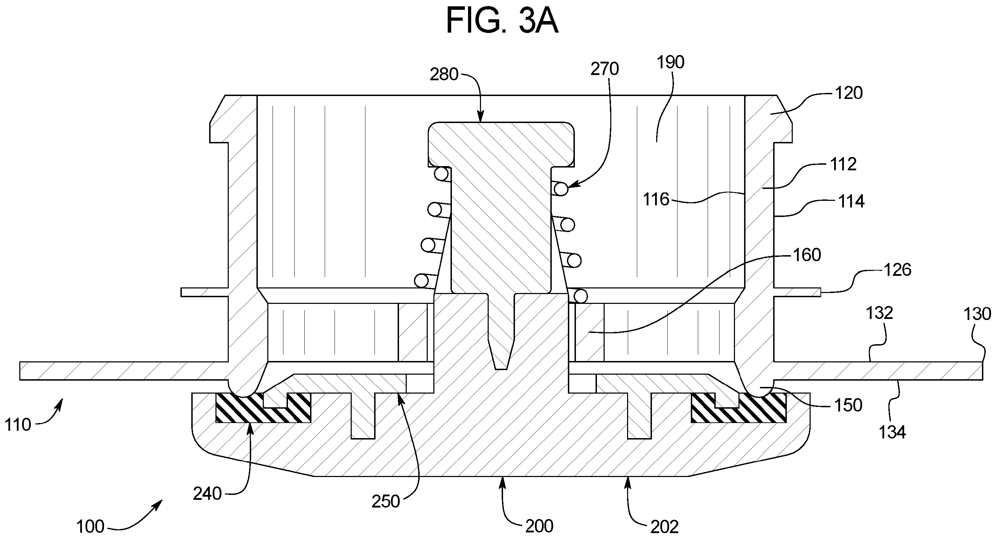

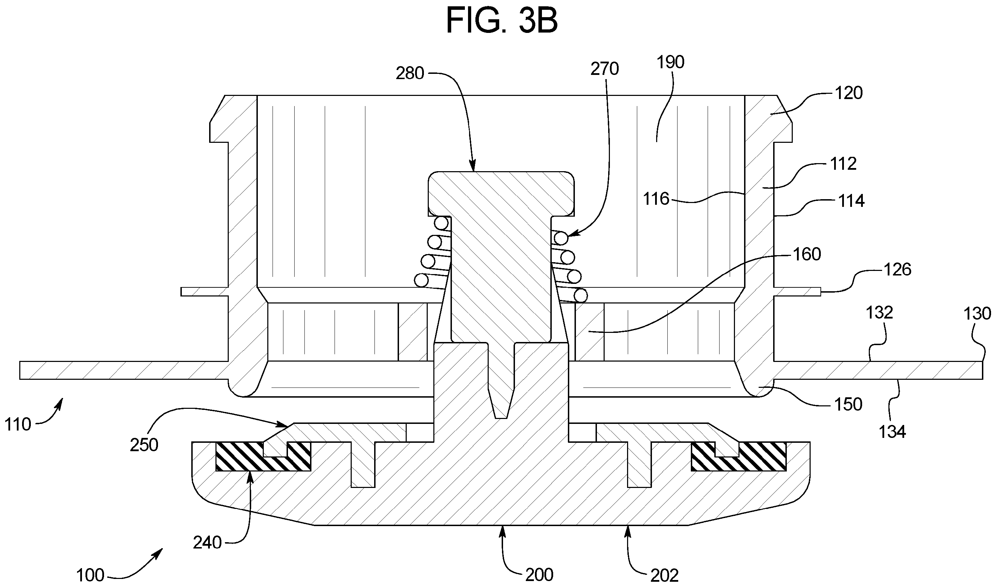

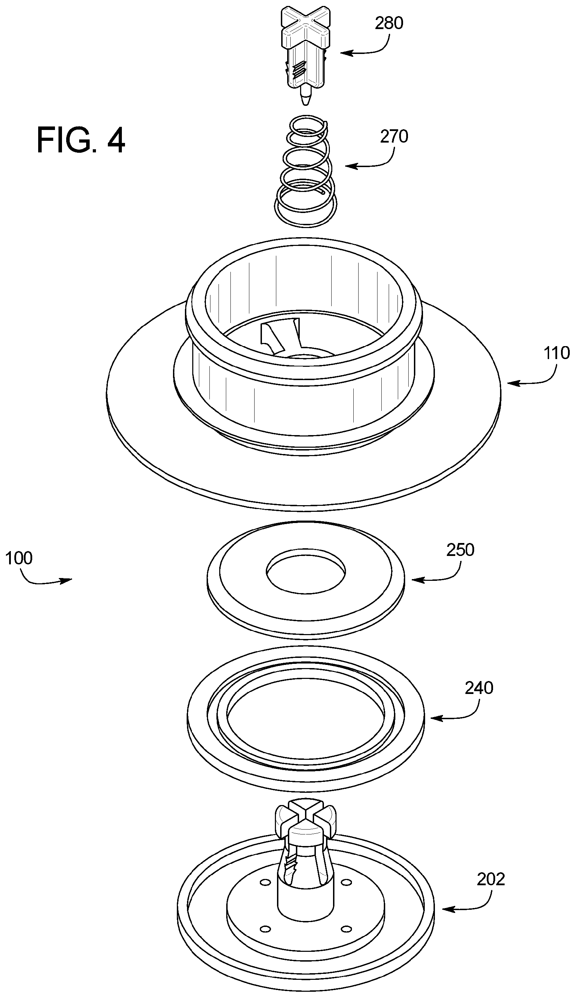

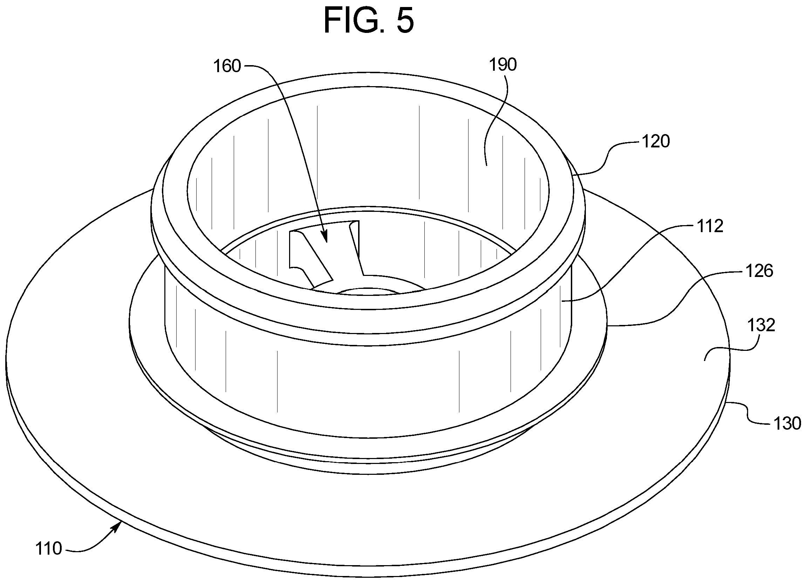

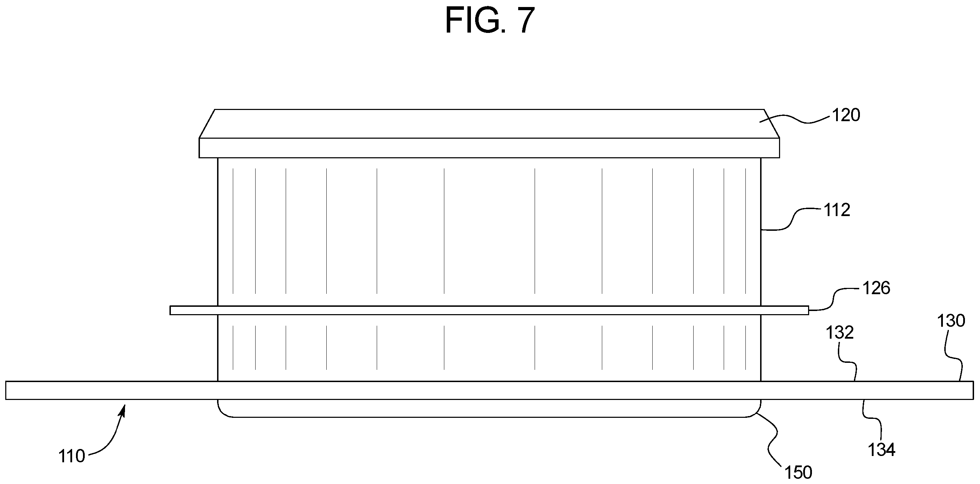

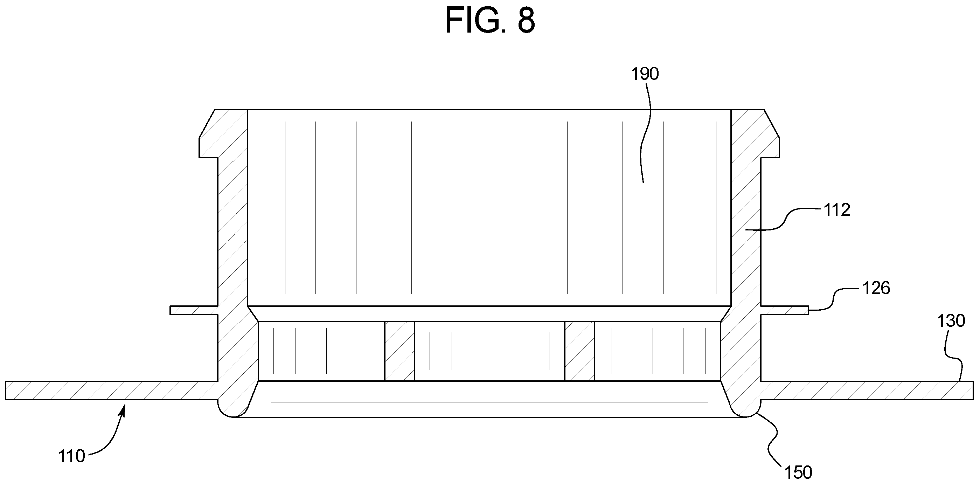

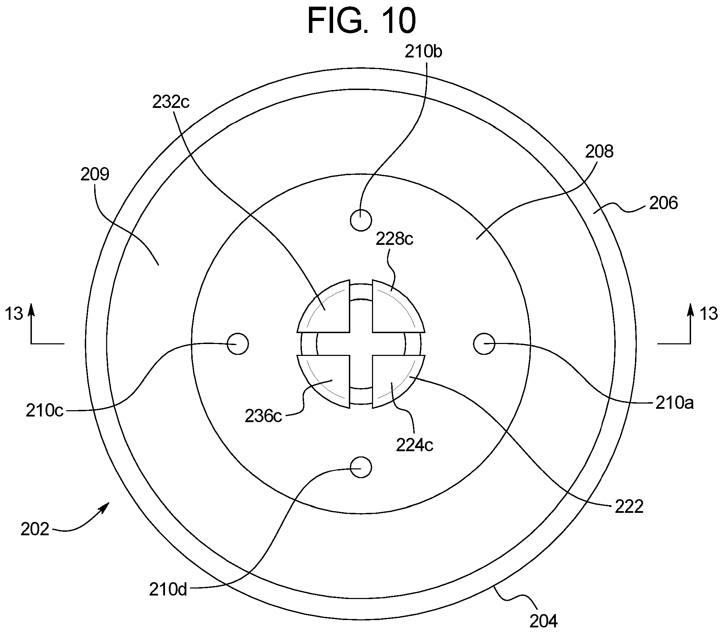

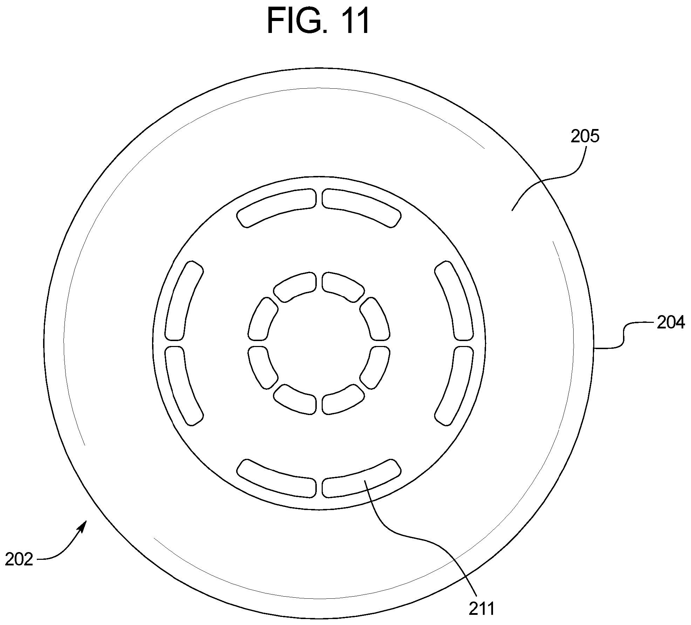

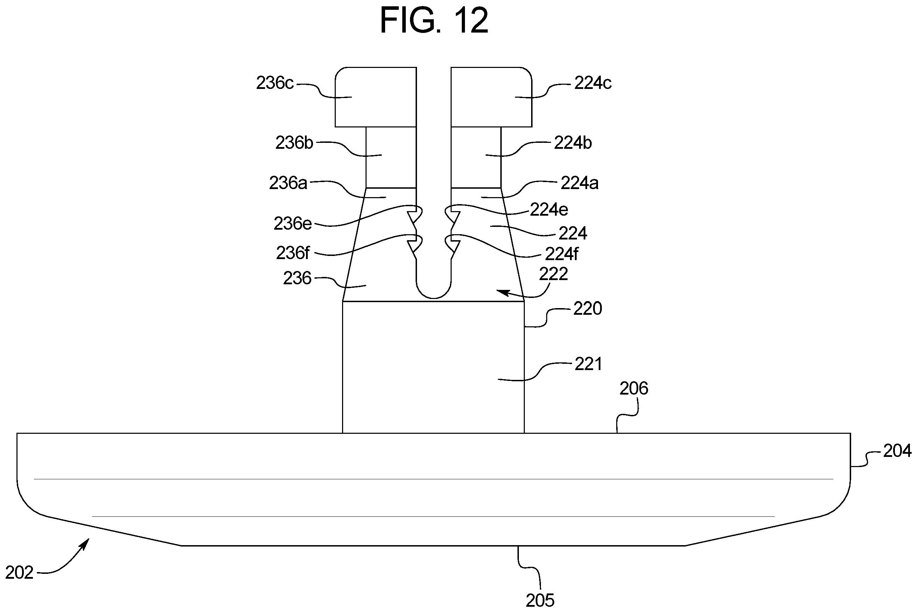

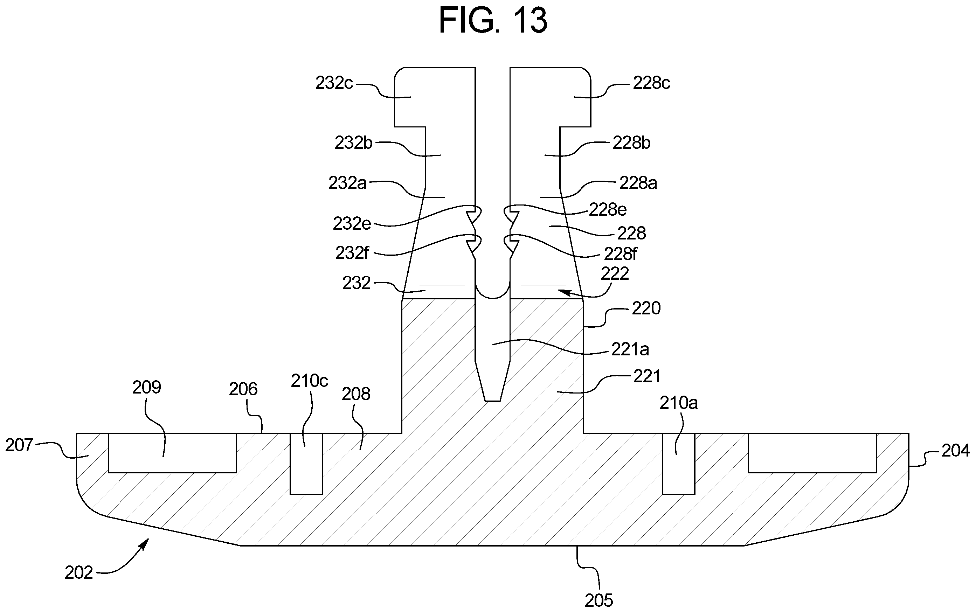

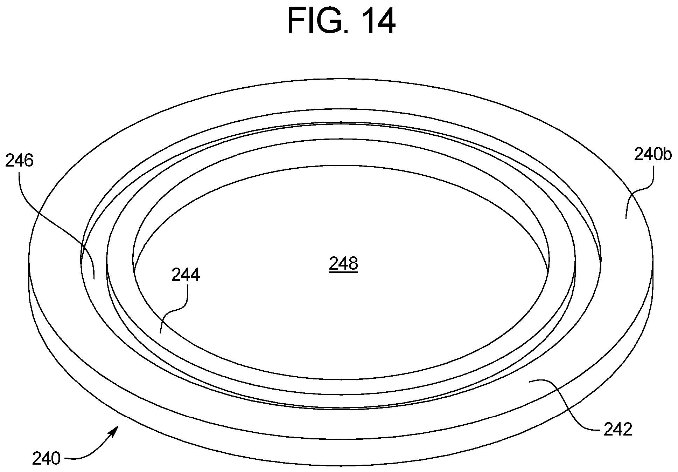

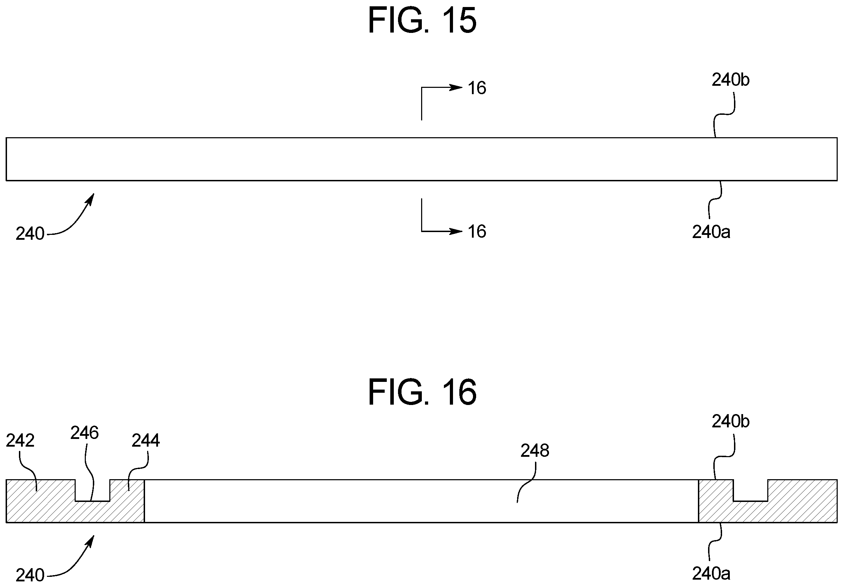

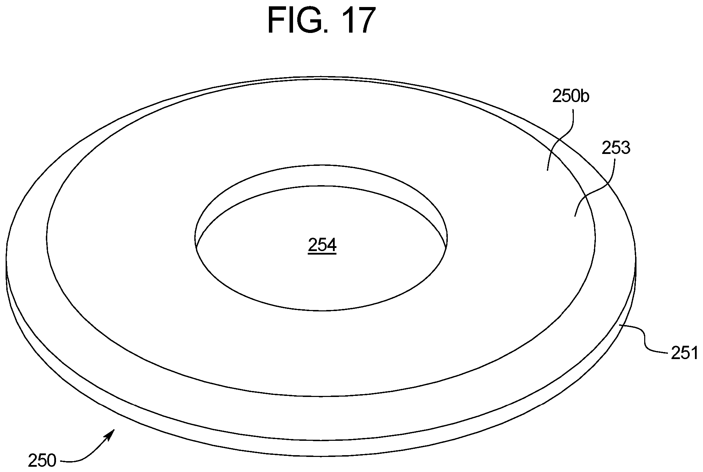

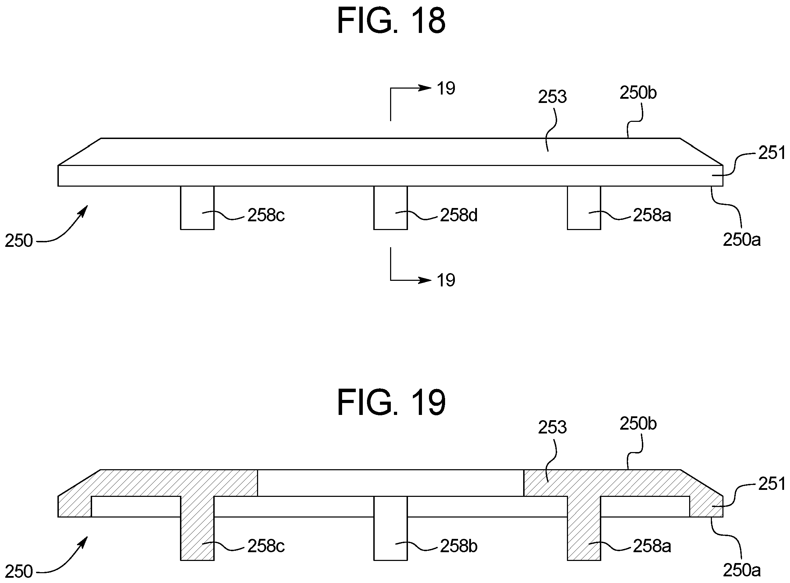

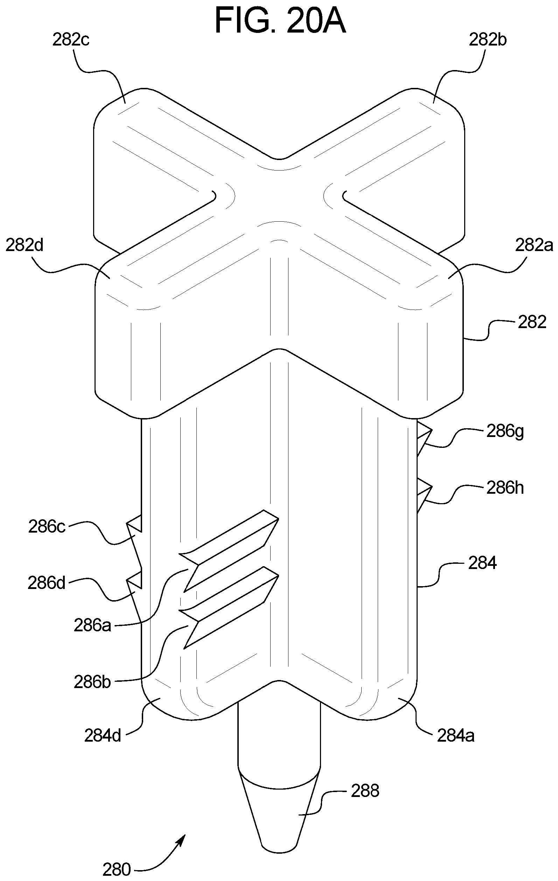

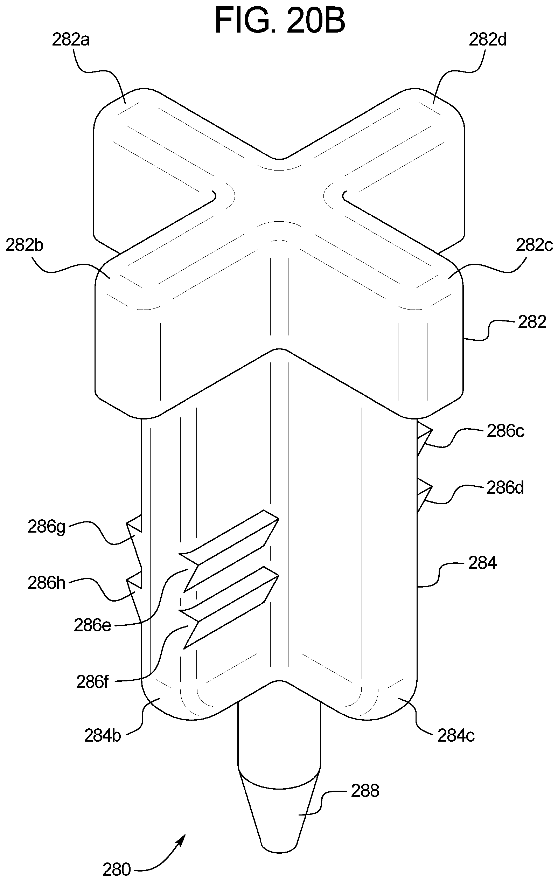

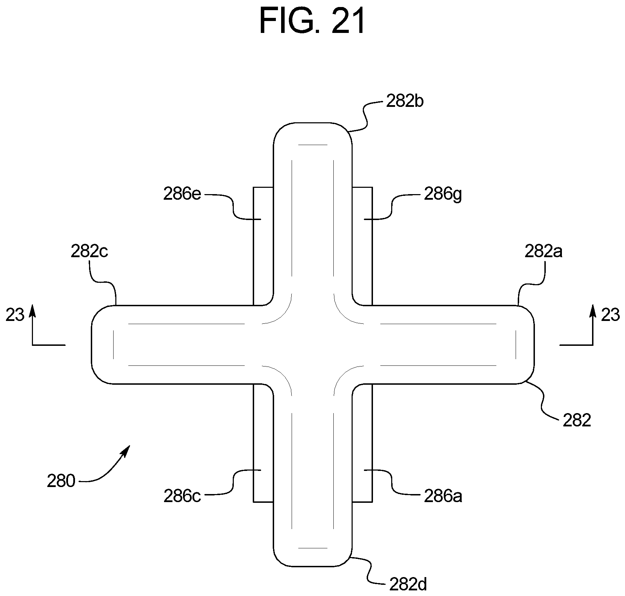

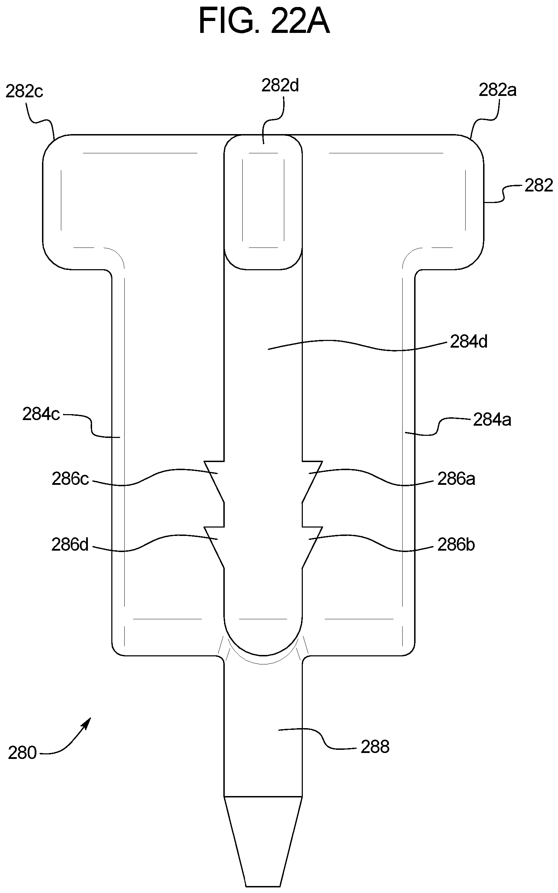

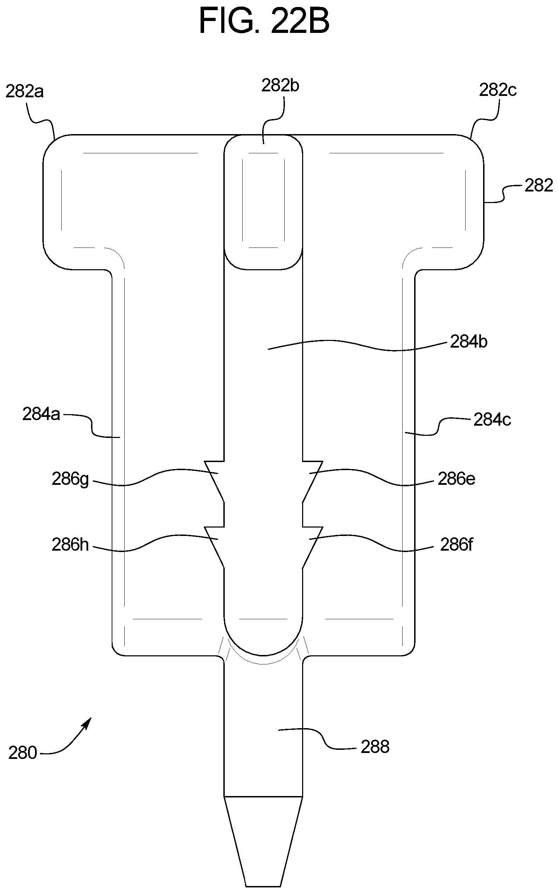

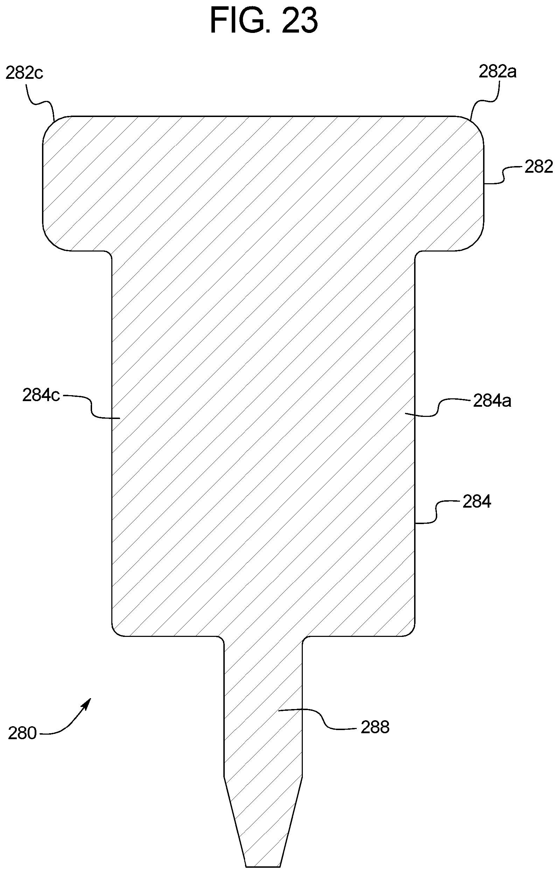

Referring now to the drawings, Figures 1 to 23 illustrate one example embodiment of the valve of the present disclosure, which is generally indicated by numeral 100. In this illustrated example embodiment, the valve 100 generally includes: (a) a housing 110 defining a gas passageway 190, and configured to be attached to an inflatable object (not shown) such as a dunnage bag (not shown); and (b) a sealing assembly 200 connected to and moveable relative to the housing 110, and configured to be in: (i) any one of a plurality of different closed resting positions (such as shown in Figures 2 and 3A) to prevent a gas such as air from passing through the housing 110, and (ii) any one of a plurality of different open positions (such as shown in Figure 3B) to enable gas such as air to pass through the housing 110.

In this illustrated example embodiment, the housing 110 (as shown in Figures 1 to 8) is formed from a one piece molded plastic body. In this illustrated example embodiment, the housing 110 generally includes: (a) a cylindrical wall 112; (b) a cylindrical locking lip 120; (c) a cylindrical or partially cylindrical annular ring 126; (d) a cylindrical or partially cylindrical attachment flange 130; (e) a cylindrical sealing seat 150; and (f) a stem supporter 160.

More specifically, the cylindrical wall 112 of the housing 110 has opposing outer and inner surfaces 114 and 116. The inner surface 114 partially defines the gas passageway 190 of the housing 110.

The locking lip 120 of the housing 110 is cylindrical and is integrally connected to and extends outwardly or transversely from the outer surface 114 of the cylindrical wall 112 of the housing 110. The locking lip 120 is configured to be engaged by a suitable cap (not shown). In certain alternative embodiments that are not shown, the locking lip does not extend all the way around the cylindrical wall 112. In certain alternative embodiments that are not shown, the locking lip is provided in two or more sections extending outwardly transversely from the cylindrical wall 112. In certain alternative embodiments that are not shown, the housing does not include any locking lip.

The annular ring 126 of the housing 110 is cylindrical and is integrally connected to and extends outwardly transversely from the outer surface 114 of the cylindrical wall 112 of the housing 110. The annular ring 126 is configured to assist in securing the valve 100 to a wall (not shown) of an inflatable object (not shown) such as a dunnage bag (not shown). In certain alternative embodiments that are not shown, the annular ring does not extend all the way around the cylindrical wall 112. In certain alternative embodiments that are not shown, the annular ring is provided in two or more sections extending outwardly transversely from the cylindrical wall 112.

The attachment flange 130 of the housing 110 is cylindrical and is integrally connected to and extends outwardly or transversely from the outer surface 114 of the cylindrical wall 112. The attachment flange 130 has opposing first and second surfaces 132 and 134. The attachment flange 130 of the housing 110 is configured to be positioned such that surface 132 of the attachment flange 130 engages an inner surface (not shown) of a wall (not shown) of an inflatable object (not shown) when the valve 100 is attached to that inflatable object. Thus, the portions of the housing 110 extending from surface 134 of the flange 130 are configured to be positioned inside the inflatable object, and the portions of the housing 110 extending from surface 132 of the flange 130 are configured to be positioned outside of the inflatable object. The attachment flange 130 is thus configured to co-act with the annular ring 126 to assist in securing the valve 100 to a wall (not shown) of an inflatable object (not shown) such as a dunnage bag (not shown). In certain alternative embodiments that are not shown, the flange does not extend around the entire housing. In certain alternative embodiments that are not shown, the flange is provided in two or more sections.

Although not shown, the housing can alternatively include a standoff configured to prevent another wall (not shown) of an inflatable object (not shown) from sealing itself to the portion of the valve 100 that is inside of that inflatable object when the valve 100 is attached to that inflatable object, thereby facilitating easier deflation of that inflatable object.

The sealing seat 150 of the housing 110 is generally cylindrical and is integrally connected to and extends downwardly from the second surface 134 of the flange 150. The sealing seat 150 is configured to be engaged by, mate with, and to provide a seat that is engaged by the sealing assembly 200 (as further discussed below) to close or seal the valve 100 or the passageway 190 defined by the housing 110 of the valve 100.

The sealing seat 150 is configured to be engaged by the sealing surface of a somewhat flexible compressible sealing ring 230 (described below) as generally shown in Figures 2 and 3A to create the seal between the sealing assembly 200 and the housing 110 when the sealing assembly 200 is in any one of the closed resting positions as shown in Figures 2 and 3A and as further discussed below.

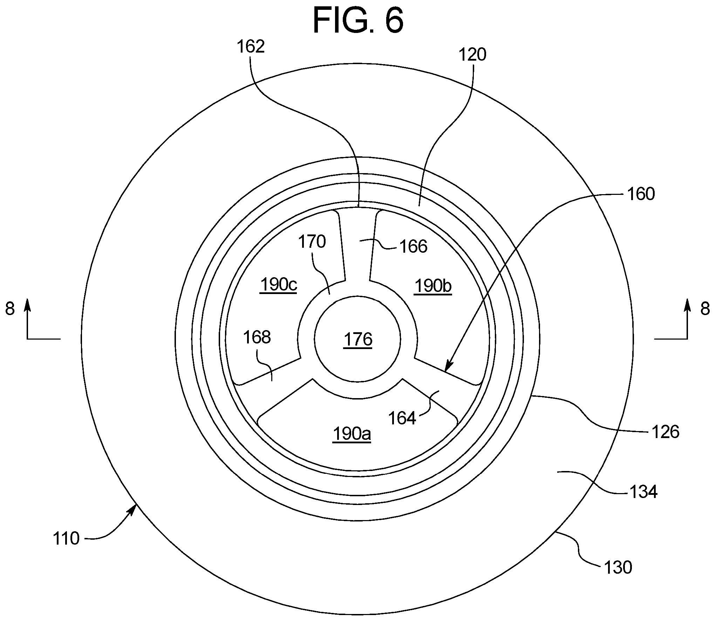

The stem supporter 160 of the housing 110 is integrally connected to and extends inwardly transversely from the inner surface 116 of the cylindrical wall 112 of the housing 110. As best shown in Figure 6, the stem supporter 160 includes an outer ring 162, a plurality of and particularly three spaced apart connecting arms 164, 166, and 168, and an inner ring 170. The outer ring 162 of the stem supporter 160 is integrally connected to and extends inwardly transversely from the inner surface 116 of the cylindrical wall 112. The spaced apart connecting arms 164, 166, and 168 are integrally connected to and extend inwardly transversely from the outer ring 162. The inner ring 170 is integrally connected to each of and extends inwardly transversely from each of the three spaced apart connecting arms 164, 166, and 168. The inner ring 170 defines a central stem receiving opening 176 configured such that the shaft 220 of the stem 202 (described below) is axially moveable through the stem supporter 160 as further discussed below.

It should be appreciated that the spaced apart connecting arms 164, 166, and 168 and the inner ring 170 define three spaced apart relatively large gas passage openings 190a, 190b, and 190c that also partially define the passageway 190 of the housing 110. These spaced apart relatively large gas passage openings 190a, 190b, and 190c enable a significant amount of gas to pass though the housing 110 and thus the valve 100 when the sealing assembly 200 is in any one of the open positions during inflation or deflation (through the valve 100) of the inflatable object to which the valve 100 is attached. The stem supporter 160 is thus configured to: (a) support the sealing assembly 200; (b) enable the sealing assembly 200 to move relative to the housing 110; (c) enable the sealing assembly 200 to be positioned in any one of the closed resting positions and any one of the open positions; and (d) enable gas to pass through the housing 110.

In this illustrated embodiment, the housing 110 is one piece and molded from a plastic such as polyethylene. It should be appreciated that the housing can be made from other suitable materials, made in other suitable manners, and made from two or more connectable pieces in accordance with the present disclosure. It should be appreciated that the one or more of the components of the housing can be alternatively configured in accordance with the present disclosure. For example, the number or positions of the spaced apart connecting arms and the openings that they partially define may vary in accordance with the present disclosure.

In this illustrated example embodiment, the sealing assembly 200 (as shown in Figures 1, 2, 3A, 3B, 4, and 9 to 23) is formed from five connectable or connected components and specifically includes: (a) a stem 202; (b) a flexible compressible sealing ring 240 positioned in and connectable or attachable to the stem 202; (c) a sealing plate 250 positionable on and connectable or attachable to the stem 202 to maintain the flexible compressible sealing ring 240 on or connected to the stem 202; (d) a spring 270; and (e) a locking pin 280 positionable in and lockably connectable into the stem 202 to maintain the entire sealing assembly 200 connected to the housing 110 and to facilitate operation of the sealing assembly 200 and the entire valve 100 as further discussed below.

More specifically, in this illustrated example embodiment, the stem 202 (as shown in Figures 1, 2, 3A, 3B, 4, 9, 10, 11, 12, and 13) is formed from a one piece molded plastic body. The stem 202 generally includes: (a) a base 204; and (b) a shaft 220 including a lower portion 221 and a locking pin receiver 222.

The base 204 of the stem 202 is generally cylindrical and has a first or bottom side 205 and an opposite second or top side 206. The base 204 includes an upwardly extending cylindrical first or outer ring or rim 207 and an upwardly extending cylindrical second or inner ring 208. The base 204 defines a cylindrical sealing ring receiving channel 209 (between the cylindrical first or outer ring or rim 207 and the cylindrical second or inner ring 208) that is configured to receive the compressible sealing ring 240. The base 204 is thus configured to receive and hold the compressible sealing ring 240. The cylindrical second or inner ring 208 defines a plurality of and in this illustrated example embodiment four spaced apart locking leg receivers 210a, 210b, 210c, and 210d that are respectively configured to receive the locking legs 258a, 258b, 258c, and 258d of the sealing plate 250 to enable the sealing plate 250 to be locked into the base 204 and thus maintain the compressible sealing ring 240 connected or attached to the base 204 as further discussed below. The base 204 defines a plurality of recesses 211 that are provided for molding purposes and to reduce the amount of material needed to form the base 204 and thus the stem 202.

The shaft 220 of the stem 202 is somewhat cylindrical, somewhat elongated, and is integrally connected to and extends centrally from the second or top side 206 of the base 204 and particularly from the cylindrical ring 208 of the base 204.

The shaft 220 is configured to move axially back and forth through the central stem receiving opening 176 defined by the inner ring 160 of the housing 110 to enable the sealing assembly 200 to axially move to: (i) any one of the resting closed positions to prevent gas from passing through the housing 110, and (ii) any on of the plurality of different open positions to enable gas to pass through the housing 110. The shaft 220 is configured to rotate in the central stem receiving opening 176 of the inner ring 170 of the stem supporter 160 of the housing 110 to enable the sealing assembly 200 to move: (a) from any one of the plurality of different open positions to any of the other plurality of different open positions; or (b) from any one of the plurality of different closed positions to any of the other plurality of different closed positions.

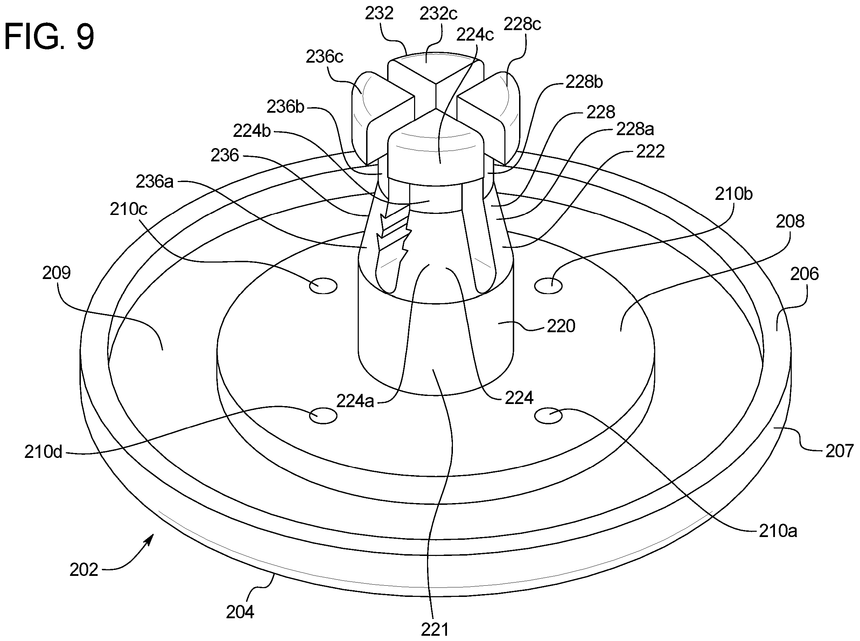

The shaft 220 includes a cylindrical lower portion 221 integrally connected at a bottom end to the base 204 and at a top end to the locking pin receiver 222. The cylindrical lower portion 221 at least partially defines a locking pin nose receiving area 221a configured to receive the nose 288 of the locking pin 280. The locking pin receiver 222 of the stem 202 is configured to receive and be securely lockingly engaged by the locking pin 280 to maintain the spring 270 in place and to maintain the stem 202 connected to the housing 110 as generally shown in Figures 1, 3A, and 3B. The locking pin receiver 222 of the stem 202 generally extends along the longitudinal axis of the shaft 220. The locking pin receiver 222 includes four upwardly extending evenly spaced apart somewhat or partially symmetrical locking arms 224, 228, 232, and 236 that are each configured to receive and be securely lockingly engaged by the locking pin 280 (as best shown in Figures 9, 10, 12, and 13).

Locking arm 224 includes: (a) a first arm member 224a integrally connected to the cylindrical lower portion 221 of the shaft 220; (b) a second arm member 224b integrally connected to the first arm member 224a; and (c) a third arm member or hand 224c integrally connected to the second arm member 224b. The first arm member 224a defines a plurality of locking notches 224e and 224f configured to receive the respective locking lips or ribs of the locking pin 280 as further described below. The third arm member or hand 224c extends outwardly transversely to provide a first spring engagement surface or contact area.

Similarly, locking arm 228 includes: (a) a first arm member 228a integrally connected to the cylindrical lower portion 221 of the shaft 220; (b) a second arm member 228b integrally connected to the first arm member 228a; and (c) a third arm member or hand 228c integrally connected to the second arm member 228b. The first arm member 228a defines a plurality of locking notches 228e and 228f configured to receive the respective locking lips or ribs of the locking pin 280 as further described below. The third arm member or hand 228c extends outwardly or transversely to provide a second spring engagement surface or contact area.

Similarly, locking arm 232 includes: (a) a first arm member 232a integrally connected to the cylindrical lower portion 221 of the shaft 220; (b) a second arm member 232b integrally connected to the first arm member 232a; and (c) a third arm member or hand 232c connected to the second arm member 232b. The first arm member 232a defines a plurality of locking notches 232e and 232f configured to receive the respective locking lips or ribs of the locking pin 280 as further described below. The third arm member or hand 232c extends outwardly or transversely to provide a third spring engagement surface or contact area.

Similarly, locking arm 236 includes: (a) a first arm member 236a integrally connected to the cylindrical lower portion 221 of the shaft 220; (b) a second arm member 236b integrally connected to the first arm member 236a; and (c) a third arm member or hand 236c connected to the second arm member 236b. The first arm member 236a defines a plurality of locking notches 236e and 236f configured to receive the respective locking lips or ribs of the locking pin 280 as further described below. The third arm member or hand 236c extends outwardly or transversely to provide a fourth spring engagement surface or contact area.

In this illustrated embodiment, the stem 202 is one piece and molded from a plastic such as polyethylene. It should be appreciated that the stem can be made from other suitable materials, made in other suitable manners, and made from two or more connectable pieces in accordance with the present disclosure. It should be appreciated that the one or more of the components of the stem can be alternatively configured in accordance with the present disclosure.

In this illustrated example embodiment, the somewhat flexible compressible sealing ring 240 (as shown in Figures 3A, 3B, 4, 14, 15, and 16) is generally cylindrical and has a first or bottom side 240a and an opposite second or top side 240b. The sealing ring 240 includes an upwardly extending cylindrical first or outer ring 242 and an upwardly extending cylindrical second or inner ring 244. The sealing ring 240 defines a cylindrical sealing plate receiving channel 226 (between the cylindrical first or outer ring 242 and the cylindrical second or inner ring 244) that is configured to receive part of outer or first ring 251 of the sealing plate 250. The sealing ring 240 also defines a cylindrical central opening 248 that enables the sealing ring 240 to be positioned over the shaft 220. The sealing ring 240 is configured to be positioned in the cylindrical scaling ring receiving channel 209 of or defined by the base 20 of the stem 202 and held in place by the sealing plate 250.

In one embodiment, sealing ring 240 is made from or includes a rubber or an elastomeric, such as a vulcanized elastomeric or a thermoplastic vulcanizate. Another example suitable material for sealing ring may be SANTOPRENE^{®} (SANTOPRENE is a registered trademark of Monsanto Company Corporation), which is manufactured by ExxonMobil Chemical. It should be appreciated that other materials can be employed for the sealing ring.

In this illustrated example embodiment, the sealing plate 250 (as shown in Figures 3A, 3B, 4, 17, 18, and 19) is generally cylindrical and has a first or bottom side 250a and an opposite second or top side 250b. The sealing plate 250 generally includes an outer or first ring 251 and an inner or second ring 253. The outer or first ring 251 is generally cylindrical and is configured to fit into the cylindrical sealing plate receiving channel 226 of the sealing ring 240 as best shown in Figures 3A and 3B. The inner or second ring 253 is integrally connected to and extends inwardly from the outer or first ring 251. The inner or second ring 253 defines a central stem receiving opening 254 configured such that the shaft 220 of the stem 202 axially extends through the sealing plate 240. The sealing plate 250 includes spaced apart downwardly extending locking legs 258a, 258b, 258c, and 258d to enable the sealing plate 250 to be locked into the base 204 of the stem 202 and thus maintain the compressible sealing ring 240 to the base 204 of the stem 202. The locking legs 258a, 258b, 258c, and 258d are configured to be inserted into the locking leg receivers 210a, 210b, 210c, and 210d defined by the base 204 as partially shown in Figures 3A and 3B. In this illustrated embodiment, a friction fit is provided between the locking legs 258a, 258b, 258c, and 258d and the walls of the base 204 that define the locking leg receivers 210a, 210b, 210c and 210d.

In this illustrated embodiment, the sealing plate 250 is one piece and molded from a plastic such as polyethylene. It should be appreciated that the sealing plate can be made from other suitable materials, made in other suitable manners, and made from two or more connectable pieces in accordance with the present disclosure. It should be appreciated that the one or more of the components of the sealing plate can be alternatively configured in accordance with the present disclosure

It should be appreciated from the above and as shown in Figures 1, 2, 3A, 3B, and 4, that to assemble the sealing assembly 200 before attaching the sealing assembly 200 to the housing 110, the flexible compressible sealing ring 240 is positioned in the base 204 of the stem 202 and the sealing plate 250 is used to secure the sealing ring 240 to the base 204 of the stem 202.

In this illustrated example embodiment, the spring 270 (as shown in Figures 1, 3A, 3B, and 4) biases the stem 202 toward the closed position (as specifically shown in Figures 2 and 3A) relative to housing 101 when the sealing assembly 200 is attached to the housing 110. In this illustrated embodiment, the spring 270 is made of steel such as a stainless steel or other corrosion resistant steel. It should be appreciated that the spring can be made from other suitable materials in accordance with the present disclosure.

In this illustrated example embodiment, the locking pin 280 (as shown in Figures 1, 3A, 3B, 4, 20A, 20B, 21, 22A, 22B, and 23) is securely lockably connectable into the stem 202 and particularly received in and securely locked into the locking pin receiver 234 of the stem 202 to retain the spring 270 and the stem 202 connected to the housing 110, and to enable a user or a device to move the stem 202 from one of the normally closed positions to one of the plurality of open positions. It should be appreciated that in this illustrated embodiment, the locking pin 280 is configured to not be readily or easily removable from the stem 202. In certain embodiments, a suitable adhesive or glue is employed to further securely attach the locking pin 280 to the stem 202.

In this illustrated example embodiment, the locking pin 280 (as shown in Figures 1, 3A, 3B, 4, 20A, 20B, 21, 22A, 22B, and 23) includes: (a) a generally cross(+) shaped head 282 including four integrally connected head sections 282a, 282b, 282c, and 282d; (b) a generally cross(+) shaped neck 284 including four integrally connected neck sections 284a, 284b, 284c, and 284d; (c) a plurality of locking ribs or lips 286a, 286b, 286c, 286d, 286e, 286f, 286g, and 286h; and (d) a nose 288.

More specifically, in this illustrated example embodiment, (a) the head section 282a is integrally connected to the neck section 284a; (b) the head section 282b is integrally connected to the neck section 284b; (c) the head section 282c is integrally connected to the neck section 284c; and (d) the head section 282d is integrally connected to the neck section 284d.

In this illustrated example embodiment, (a) the locking ribs or lips 286a and 286b are integrally connected to and transversely extend from one side of the neck section 284b; and (b) the locking ribs or lips 286c and 286d are integrally connected to and transversely extend from the opposite side of the neck section 284b. In this illustrated example embodiment, (a) the locking ribs or lips 286e and 286f are integrally connected to and transversely extend from one side of the neck section 284d; and (b) the locking ribs or lips 286g and 286h are integrally connected to and transversely extend from the opposite side of the neck section 284d.

In this illustrated example embodiment, the nose 288 extends longitudinally from the neck 284.

In this illustrated embodiment, the locking pin 280 is one piece and molded from a plastic such as polyethylene. It should be appreciated that the locking pin can be made from other suitable materials, made in other suitable manners, and made from two or more connectable pieces in accordance with the present disclosure. It should be appreciated that the one or more of the components of the locking pin can be alternatively configured in accordance with the present disclosure.

In this illustrated example embodiment, the locking pin 280 can be inserted into and locked into the stem 202 in two different orientations.

In one such orientation, (a) the head section 282a is positioned between arm member or hand 224c and arm member or hand 228c; (b) the head section 282b is positioned between arm member or hand 228c and arm member or hand 232c; (c) the head section 282c is positioned between arm member or hand 232c and arm member or hand 236c; and (d) the head section 282d is positioned between arm member or hand 236c and arm member or hand 224c.

In this orientation, (e) the neck section 284a is positioned between first arm member 224b and the first arm member 228b; (f) the neck section 284b is positioned between first arm member 228b and the first arm member 232b; (g) the neck section 284c is positioned between first arm member 232b and first arm member 236b; and (h) the neck section 284d is positioned between first arm member 236b and first arm member 224b.

In this orientation, (i) the neck section 284a is also positioned between second arm member 224a and the second arm member 228a; (j) the neck section 284b is also positioned between second arm member 228a and the second arm member 232a; (k) the neck section 284c is also positioned between second arm member 232a and second arm member 236a; and (I) the neck section 284d is also positioned between second arm member 236a and second arm member 224a.

In this orientation, (m) the locking rib or lip 286a is positioned in the locking notch 224e; (n) the locking rib or lip 286b is positioned in locking notch 224f; (o) the locking rib or lip 286c is positioned in the locking notch 236e; and (p) the locking rib or lip 286d is positioned in locking notch 236f.

In this orientation, (q) the locking rib or lip 286e is positioned in the locking notch 228e; (r) the locking rib or lip 286f is positioned in locking notch 228f; (s) the locking rib or lip 286g is positioned in the locking notch 232e; and (t) the locking rib or lip 286h is positioned in locking notch 232f.

In this orientation, the nose 288 is positioned in the locking pin nose receiving area 221a defined by the stem 202.

In this orientation, the multiple respective engagements between upper surfaces of the locking ribs or lips 286a, 286b, 286c, 286d, 286e, 286f, 286g, and 286h and the lower surfaces of upper portion 222 of the shaft 220 of the stem 202 that partially define the notches 224e, 224f, 228e, 228f, 232e, 232f, 236e, and 236f co-act to provide a secure engagement between the locking pin 280 and the shaft 220 of the stem 202 when the locking pin 280 is inserted into the shaft 220 of the stem 202. This prevents the locking pin 280 from coming out of the shaft 220.

In this illustrated example embodiment, the locking pin 280 can be rotated 180 degrees to provide the other orientation in which the locking pin 280 can be inserted into the shaft 220 of the stem 202.

In this illustrated embodiment, the locking ribs or lips 286a, 286b, 286c, 286d, 286e, 286f, 286g, and 286h are positioned on two of the opposing neck sections 284b and 284d. It should be appreciated that in alternative embodiments of the present disclosure, the locking ribs or lips (and associated notches) can be alternatively positioned such as on each of the neck sections.

It should also be appreciated that in alternative embodiments of the present disclosure, the quantity of the locking ribs or lips (and associated notches) can vary.

It should further be appreciated that in alternative embodiments of the present disclosure, the shape or configuration of the locking ribs or lips (and associated notches) can vary.

It should also be appreciated that in this illustrated embodiment, the sealing assembly 200 is formed from five individually formed components. It should be appreciated that the sealing assembly can be made in other suitable manners and made from more or less than five pieces in accordance with the present disclosure. It should be appreciated that one or more of the components of the sealing assembly can be alternatively configured in accordance with the present disclosure.

As mentioned above and as generally shown in Figures 1, 2, 3A, and 3B, the sealing assembly 200 is moveable relative to the housing 110, and configured to be in: (i) any one of a plurality of closed resting positions to prevent a gas such as air to pass through the housing 110, and (ii) any one of a plurality of different open positions to enable gas such as air to pass through the housing 110. Figure 3A shows one of the closed resting positions. Figure 3B shows one of the open positions.

Although not illustrated, the valve of the present disclosure may include a cap or a combined attachment ring and cap assembly. The combined attachment ring and cap assembly is configured to assist in attaching the valve to an inflatable object such as a dunnage bag, and is configured to prevent contaminants from entering the housing and the inflatable object through the valve.

It should be appreciated that the embodiment of the valve illustrated in the accompanying figures employs one example configuration of components and one example size and shape of each of the components. It should be appreciated that other embodiments of the valve may employ different configurations of the components and/or components of different sizes or shapes.

It should be understood that modifications and variations may be effected without departing from the scope of the novel concepts of the present disclosure, and it should be understood that this application is to be limited only by the scope of the appended claims.

## Claims

1. A valve (100) configured to be attached to an inflatable object, said valve (100) comprising:
a housing (110) defining a gas passageway (190); and
a sealing assembly (200) connected to and moveable relative to the housing (110) to: (a) a resting closed position that prevents gas from passing through the housing (110), and (b) an open position that enables gas to pass through the housing (110), the sealing assembly (200) including: (i) a stem (202), (ii) a sealing ring (240) positionable in and connected to the stem (202), (iii) a sealing plate (250) attached to the stem (202), (iv) a spring (270), and (v) a locking pin (280) positioned in and locked into the stem (202),
wherein the locking pin (280) includes a plurality of locking ribs or lips (286ah), and the stem (202) includes a shaft (220) that defines a plurality of notches (224e, 224f, 228e, 228f, 232e, 232f, 236e, 236f) configured to receive the locking lips or ribs (286a-h) of the locking pin (280).

2. The valve (100) of claim 1, wherein the shaft (220) has a plurality of spaced apart locking arms (224, 228, 232, 236) that are each configured to receive and be securely lockingly engaged by the locking pin (280).

3. The valve (100) of claim 2, wherein the locking arms (224, 228, 232, 236) define the plurality of locking notches (224e, 224f, 228e, 228f, 232e, 232f, 236e, 236f).

4. The valve (100) of claim 1, wherein the locking pin (280) includes: (a) a generally cross shaped head (282) including four connected head sections (282a-d); and (b) a generally cross shaped neck (284) including four connected neck sections (284a-d).

5. The valve (100) of claim 4, wherein the plurality of locking ribs or lips (286a-h) extend from at least two of the neck sections (284a-d).

6. The valve (100) of claim 4, wherein one of the locking ribs or lips (286a-h) is integrally connected to and transversely extends from one side of one of the neck sections (284a-d) and another one of the locking ribs or lips (286a-h) is integrally connected to and transversely extends from an opposite side of said neck section (284a-d).

7. The valve (100) of claim 4, wherein two of the locking ribs or lips (286a-h) are integrally connected to and transversely extend from one side of one of the neck sections (284a-d) and another two of the locking ribs or lips (286a-h) are integrally connected to and transversely extend from an opposite side of said neck section (284a-d).

8. The valve (100) of claim 1, wherein the housing (110) includes: (a) a cylindrical wall (112); (b) a locking lip (120) connected to and extending outwardly from an outer surface of the cylindrical wall (112); (c) an annular ring (126) connected to and extending outwardly from the outer surface of the cylindrical wall (112); (d) an attachment flange (130) connected to and extending outwardly from the outer surface of the cylindrical wall (112); and (e) a sealing seat (150) connected to and extending from the attachment flange (130).

9. The valve (100) of claim 1, wherein the stem (202) includes: (a) a base (204), and (b) a shaft (220) connected to extending from the base (204) and including a locking pin receiver opposite the base (204).

10. An inflatable object comprising:
an inflatable/deflatable body including one or more walls; and
a valve (100) according to any of the preceding claims mounted to the body.

## Patentansprüche

1. Ventil (100), das zur Befestigung an einem aufblasbaren Objekt ausgelegt ist, wobei das Ventil (100) Folgendes umfasst:
ein Gehäuse (110), das einen Gasdurchgang (190) definiert; und
eine Dichtungsanordnung (200), die mit dem Gehäuse (110) verbunden und relativ zu diesem beweglich ist zu: (a) einer geschlossenen Ruhestellung, die den Gasdurchtritt durch das Gehäuse (110) verhindert, und (b) einer offenen Stellung, die den Gasdurchtritt durch das Gehäuse (110) ermöglicht, wobei die Dichtungsanordnung (200) Folgendes einschließt: (i) einen Schaft (202), (ii) einen Dichtring (240), der im Schaft (202) positionierbar und mit diesem verbunden ist, (iii) eine am Schaft (202) befestigte Dichtplatte (250), (iv) eine Feder (270) und (v) einen Verriegelungsstift (280), der im Schaft (202) positioniert und verriegelt ist,
wobei der Verriegelungsstift (280) eine Vielzahl von Verriegelungsrippen oder -lippen (286a-h) einschließt und der Schaft (202) eine Spindel (220) einschließt, die eine Vielzahl von Kerben (224e, 224f, 228e, 228f, 232e, 232f, 236e, 236f) bildet, die zur Aufnahme der Verriegelungslippen oder - rippen (286a-h) des Verriegelungsstifts (280) ausgelegt sind.

2. Ventil (100) nach Anspruch 1, wobei die Spindel (220) eine Vielzahl von beabstandeten Verriegelungsarmen (224, 228, 232, 236) aufweist, die jeweils so ausgelegt sind, dass sie den Verriegelungsstift (280) aufnehmen und sicher mit diesem verriegelnd in Eingriff stehen.

3. Ventil (100) nach Anspruch 2, wobei die Verriegelungsarme (224, 228, 232, 236) die Vielzahl von Verriegelungskerben (224e, 224f, 228e, 228f, 232e, 232f, 236e, 236f) bilden.

4. Ventil (100) nach Anspruch 1, wobei der Verriegelungsstift (280) Folgendes einschließt: (a) einen allgemein kreuzförmigen Kopf (282), der vier miteinander verbundene Kopfabschnitte (282a-d) einschließt; und (b) einen allgemein kreuzförmigen Hals (284), der vier miteinander verbundene Halsabschnitte (284a-d) einschließt.

5. Ventil (100) nach Anspruch 4, wobei sich die Vielzahl von Verriegelungsrippen oder -lippen (286a-h) von mindestens zwei der Halsabschnitte (284a-d) erstreckt.

6. Ventil (100) nach Anspruch 4, wobei eine der Verriegelungsrippen oder - lippen (286a-h) integral mit einer Seite eines der Halsabschnitte (284a-d) verbunden ist und sich quer von dieser erstreckt und eine weitere der Verriegelungsrippen oder -lippen (286a-h) integral mit einer gegenüberliegenden Seite des Halsabschnitts (284a-d) verbunden ist und sich quer von dieser erstreckt.

7. Ventil (100) nach Anspruch 4, wobei zwei der Verriegelungsrippen oder - lippen (286a-h) integral mit einer Seite eines der Halsabschnitte (284a-d) verbunden sind und sich quer von dieser erstrecken und zwei weitere der Verriegelungsrippen oder -lippen (286a-h) integral mit einer gegenüberliegenden Seite des Halsabschnitts (284a-d) verbunden sind und sich quer von dieser erstrecken.

8. Ventil (100) nach Anspruch 1, wobei das Gehäuse (110) Folgendes einschließt: (a) eine zylindrische Wand (112); (b) eine Verriegelungslippe (120), die mit einer Außenfläche der zylindrischen Wand (112) verbunden ist und sich von dieser nach außen erstreckt; (c) einen ringförmigen Ring (126), der mit der Außenfläche der zylindrischen Wand (112) verbunden ist und sich von dieser nach außen erstreckt; (d) einen Befestigungsflansch (130), der mit der Außenfläche der zylindrischen Wand (112) verbunden ist und sich von dieser nach außen erstreckt; und (e) einen Dichtsitz (150), der mit dem Befestigungsflansch (130) verbunden ist und sich von diesem erstreckt.

9. Ventil (100) nach Anspruch 1, wobei der Schaft (202) Folgendes einschließt: (a) einen Sockel (204) und (b) eine Spindel (220), die mit dem Sockel (204) verbunden ist, sich von diesem erstreckt und eine dem Sockel (204) gegenüberliegende Aufnahme für einen Verriegelungsstift einschließt.

10. Aufblasbares Objekt, umfassend:
einen aufblasbaren/entleerbaren Körper einschließlich einer oder mehrerer Wände; und
ein Ventil (100) nach einem der vorstehenden Ansprüche, das am Körper angebracht ist.

## Revendications

1. Valve (100) conçue pour être fixée à un objet gonflable, ladite valve (100) comprenant :
un boîtier (110) définissant un passage de gaz (190) ; et
un ensemble d'étanchéité (200) relié au boîtier (110) et mobile par rapport à celui-ci : (a) dans une position fermée de repos empêchant le passage du gaz à travers le boîtier (110), et (b) dans une position ouverte permettant le passage du gaz à travers le boîtier (110), l'ensemble d'étanchéité (200) comprenant : (i) une tige (202), (ii) une bague d'étanchéité (240) positionnable dans la tige (202) et reliée à celle-ci, (iii) une plaque d'étanchéité (250) fixée à la tige (202), (iv) un ressort (270), et (v) une goupille de verrouillage (280) positionnée dans la tige (202) et verrouillée à celle-ci,
dans laquelle la goupille de verrouillage (280) comprend une pluralité de nervures ou de lèvres de verrouillage (286a-h), et la tige (202) comprend un arbre (220) qui définit une pluralité d'encoches (224e, 224f, 228e, 228f, 232e, 232f, 236e, 236f) configurées pour recevoir les lèvres ou nervures de verrouillage (286a-h) de la goupille de verrouillage (280).

2. Valve (100) selon la revendication 1, dans laquelle l'arbre (220) présente une pluralité de bras de verrouillage espacés (224, 228, 232, 236) qui sont chacun configurés pour recevoir et être solidement engagés par la goupille de verrouillage (280).

3. Valve (100) selon la revendication 2, dans laquelle les bras de verrouillage (224, 228, 232, 236) définissent la pluralité d'encoches de verrouillage (224e, 224f, 228e, 228f, 232e, 232f, 236e, 236f).

4. Valve (100) selon la revendication 1, dans laquelle la goupille de verrouillage (280) comprend : (a) une tête généralement en forme de croix (282) comprenant quatre sections de tête reliées (282a-d) ; et (b) un col généralement en forme de croix (284) comprenant quatre sections de col reliées (284a-d).

5. Valve (100) selon la revendication 4, dans laquelle la pluralité de nervures ou lèvres de verrouillage (286a-h) s'étend à partir d'au moins deux des sections de col (284a-d).

6. Valve (100) selon la revendication 4, dans laquelle l'une des nervures ou lèvres de verrouillage (286a-h) est reliée de manière intégrale à un côté de l'une des sections de col (284a-d) et s'étend transversalement à partir de celui-ci et l'autre des nervures ou lèvres de verrouillage (286a-h) est reliée de manière intégrale à un côté opposé de ladite section de col (284a-d) et s'étend transversalement à partir de celui-ci.

7. Valve (100) selon la revendication 4, dans laquelle deux des nervures ou lèvres de verrouillage (286a-h) sont reliées de manière intégrale à un côté de l'une des sections de col (284a-d) et s'étendent transversalement à partir de celui-ci et deux autres nervures ou lèvres de verrouillage (286a-h) sont reliées de manière intégrale à un côté opposé de ladite section de col (284a-d) et s'étendent transversalement à partir de celui-ci.

8. Valve (100) selon la revendication 1, dans laquelle le boîtier (110) comprend : (a) une paroi cylindrique (112) ; (b) une lèvre de verrouillage (120) reliée à la surface extérieure de la paroi cylindrique (112) et s'étendant vers l'extérieur de celle-ci ; (c) une bague annulaire (126) reliée à la surface extérieure de la paroi cylindrique (112) et s'étendant vers l'extérieur de celle-ci ; (d) une bride de fixation (130) reliée à la surface extérieure de la paroi cylindrique (112) et s'étendant vers l'extérieur de celle-ci ; et (e) un siège d'étanchéité (150) relié à la bride de fixation (130) et s'étendant vers l'extérieur de celle-ci.

9. Valve (100) selon la revendication 1, dans laquelle la tige (202) comprend : (a) une base (204), et (b) un arbre (220) relié à la base (204) et s'étendant à partir de celle-ci et comprenant un récepteur de goupille de verrouillage opposé à la base (204).

10. Objet gonflable comprenant :
un corps gonflable/dégonflable comprenant une ou plusieurs parois ; et
une valve (100) selon l'une quelconque des revendications précédentes montée sur le corps.
